# EUROPEAN PATENT SPECIFICATION

(11) **EP 4 258 957 B1**
(45) Date of publication and mention of the grant of the patent: **03.06.2026**
(21) Application number: 21824083.6
(22) Date of filing: 10.12.2021
(51) Int. Cl.: A47J 31/46, A47J 31/44, A47J 31/60

(54) **MACHINE FOR PRODUCING MILK-BASED BEVERAGES WITH A MILK MODULE FOR PRODUCING HOT OR COLD, FOAMED OR NON-FOAMED MILK**
MASCHINE ZUR HERSTELLUNG VON MILCHBASIERTEN GETRÄNKEN MIT EINEM MILCHMODUL ZUR HERSTELLUNG VON WARMER ODER KALTER, GESCHÄUMTER ODER UNGESCHÄUMTER MILCH
MACHINE POUR LA PRÉPARATION DE BOISSONS À BASE DE LAIT AVEC UN MODULE DE LAIT PERMETTANT DE PRODUIRE DU LAIT CHAUD OU FROID, MOUSSEUX OU NON MOUSSEUX

(30) Priority: 10.12.2020 IT 202000030392
(43) Date of publication of application: 18.10.2023
(73) Proprietor: Rheavendors Industries S.p.A., 22100 Como (IT)
(72) Inventor: CERIANI, Ezio, 22100 Como (IT); SISTO, Giuseppe Antonio Ercolino, 22100 Como (IT)
(74) Representative: Studio Torta S.p.A.
(86) International application number: PCT/IB2021/061572
(87) International publication number: WO 2022/123520

(56) References cited:
- EP-A1- 1 707 090
- EP-A1- 2 225 976
- EP-A1- 2 636 343
- EP-A1- 3 064 104
- EP-A1- 3 248 519
- DE-T5- 112018 000 582
- US-A1- 2019 069 714

## Description

### Technical Field of the Invention

The invention relates to a machine for producing milk-based beverages with a milk module for producing hot or cold, foamed or non-foamed milk, and integrable in a machine for producing milk-based beverages. In particular, the invention finds advantageous application in table-top machines for producing milk-based beverages, to which reference will be made in the description without loosing in generality.

### State of the Art

As is known, in the above-mentioned beverage production machines, the milk module usually comprises a washing circuit designed to periodically clean all those components of the milk module that, in use, come into contact with milk and, for this reason, are likely to be subjected to the proliferation of bacteria. Usually, the milk module is subjected to a water rinsing process at the end of each milk-based beverage producing cycle and a more in-depth washing process with water and detergent when the beverage production machine is not operating, normally at the end of a work day.

A known milk module usually comprises a milk line provided with a pump for sucking fresh milk from a milk container, a foaming device, a heating device and a dispensing nozzle, through which hot or cold, foamed or non-foamed milk is delivered into a cup or similar container.

During rinsing and washing processes, a given amount of water or water and detergent is cause to flow along the milk line and is drained into a waste container, normally via a valve.

In the table-top machines for producing milk-based beverages, the milk dispensing nozzle is usually stationary in a beverage dispensing compartment, so the washing liquid is normally prevented from flowing up to the beverage dispensing nozzle and is drained towards the waste container in a point of the milk line upstream of, and at a given distance from, the beverage dispensing nozzle. As a result, the end part of the milk line or, at least, the beverage dispensing nozzle is never involved in the washing process and require a manual cleaning intervention by an operator, who normally removes the beverage dispensing nozzle and washes it separately. The document EP 3 248 519 Al discloses a machine for producing milk-based beverages with a milk module.

### Object and Summary of the Invention

The object of the present invention is to provide a dispensing nozzle for a milk module for producing hot or cold, foamed or non-foamed milk and integrable in a machine for producing milk-based beverages, the dispensing nozzle allowing the efficiency of the washing of both the dispensing nozzle and of those components of the milk module upstream of the dispensing nozzle and which, in use, come into contact with milk to be improved compared to known milk modules.

According to the present invention, a machine for producing milk-based beverages with a milk module for producing hot or cold, foamed or non-foamed milk and a dispensing nozzle is provided, as claimed in the appended claims.

### Brief Description of the Drawings

Figure 1 shows a hydraulic circuit of a preferred embodiment of a machine for producing milk-based beverages according to the present invention.
Figures 2 and 3 show, in a perspective view, a detail of the machine for producing milk-based beverages shown in Figure 1.
Figure 4 is a sectional view from the bottom of the detail shown in Figure 2 and 3.

### Description of Preferred Embodiments of the Invention

The invention will now be described in detail with reference to the attached figure to enable a skilled person to realize and use it. Various modifications to the embodiments presented shall be immediately clear to persons skilled in the art and the general principles disclosed herein could be applied to other embodiments and applications but without thereby departing from the scope of protection of the present invention as defined in the appended claims. Therefore, the present invention should not be considered limited to the embodiments described and shown but should be granted the widest protective scope in accordance with the features described and claimed.

Where not otherwise defined, all the technical and scientific terms used herein have the same meaning commonly used by persons of ordinary skill in the field pertaining to the present invention. In the event of a conflict, this description, including the definitions provided, shall be binding. Furthermore, the examples are provided for illustrative purposes only and as such should not be considered limiting.

In order to facilitate understanding of the embodiments described herein, reference will be made to some specific embodiments and a specific language will be used to describe them. The terminology used herein is for the purpose of describing only particular embodiments, and is not intended to limit the scope of the present invention.

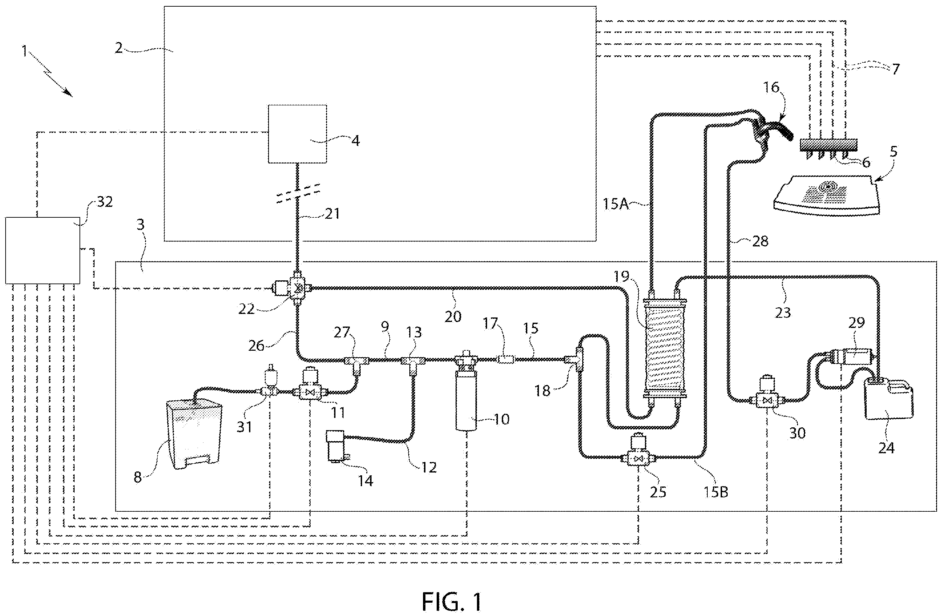

Figure 1 schematically shows a machine **1** for producing milk-based beverages and comprising a brewing unit **2** to produce beverages such as espresso and beverages from soluble products, and a milk module **3** to produce of hot or cold, foamed or non-foamed milk.

The brewing unit **2** comprises a plurality of conventional functional assemblies and, for this reason, will not be described in detail. In general, the brewing unit **2** comprises a brewer (not shown) to produce espresso, one or more mixers (not shown) to produce beverages from soluble products, a heater **4** to produce hot water or steam, and a pump (not shown) to supply the brewer and the mixers with hot water required to produce beverages.

The machine **1** further comprises a beverage dispensing compartment **5,** where a group of dispensing nozzles 6 are arranged, which are fluidically connected to the brewing unit **2** via respective supply lines **7** to receive, in use, beverages produced by the brewing unit **2** and dispense them into a cup or similar container (not shown) on a cup-carrier grid in the beverage dispensing compartment **5.**

The milk module **3** is selectively fluidically connectable to the brewing unit **2,** more precisely to the heater **4,** to receive, during operation, steam and hot water to be used, as explained more in detail below, to heat the milk and, respectively, to wash those components of the milk module **3** that, in use, come into contact with the milk and, hence, that need a regular cleaning in order to avoid the proliferation of bacteria.

Figure 1 schematically shows a hydraulic circuit of the milk module **3,** which comprises:
a milk container **8,** which is preferably arranged inside a refrigerated area to keep the milk at a temperature ranging from 3° to 5°;
a suction line **9** having a first end immersed in the milk container **8** and a second end fluidically connected to the suction side of a pump **10,** preferably a gear pump; the inflow of milk into the suction line **9** is controlled by a shut-off valve **11;**
an air line **12,** through which an ambient air flow is introduced into the suction **9** at a T joint **13** arranged upstream of the pump **10.** The inflow of air into the air line **12** is controlled by a valve **14,** which enables or inhibits the introduction of an air flow into the air line **12** depending on whether foamed or non-foamed milk, respectively, has to be produced. Conveniently, the valve **14** is a proportional solenoid valve, which allows the air flow rate to be adjusted according to closed-loop or open-loop control algorithms, which are widely known in the sector; and
a delivery line **15** designed to convey milk or milk and air mixture from the pump **10** to a milk dispensing nozzle **16** which is arranged in the beverage dispensing compartment **5** and is part of the group of dispensing nozzles **6.**

The delivery line **15** has, downstream of the pump **10,** a flow restriction **17** which defines a concentrated reduction of the cross section of the delivery line **15** so as to causa, in use, the milk and air mixture flowing therethrough to be subjected to a quick compression and to a successive quick expansion, which transforms, based on a principle well known to a person skilled in the art, the milk and air mixture into foamed milk.

The flow restriction **17** can be formed by a non- adjustable nozzle or by a baffle or by a throttle valve, which may be either adjustable or non-adjustable.

Downstream of the flow restriction **17,** the delivery line **15** has a bifurcation **18,** from which two parallel ducts branch off and both open into the milk dispensing nozzle **16.** One of the two ducts, hereinafter referenced with **15A,** supplies foamed or non-foamed hot milk to the milk dispensing nozzle **16,** whereas the other one of the two ducts, hereinafter referenced with **15B,** supplies foamed or non-foamed cold milk to the milk dispensing nozzle **16.**

The milk or the foamed milk flowing in the duct **15A** is heated by a heater **19,** which, according to a preferred embodiment shown in Figure 1, is in the form of a heat exchanger, in which the milk or the foamed milk is indirectly heated by a steam flow supplied to a cylindrical duct which winds around a spiral-shaped portion of the duct **15A.**

The steam flow supplied to the heater **19** is produced by the heater **4** of the brewing unit **2** and is conveyed to the heater **19** by a steam line **20** with a first end fluidically connected, via a three-way valve **22,** to a hot water/steam supply duct **21,** which, in turn, is directly or indirectly connected to an outlet of the heater **4,** and with a second end fluidically connected to an inlet of the spiral-shaped duct of the heater **19** to supply the latter with the steam flow.

On the opposite side, the spiral-shaped duct of the heater **19** has an outlet fluidically connected to a discharge line **23** designed to convey duct into a waste container **24** condensation water that is formed, during operation, by the cooling of the steam along the spiral-shaped duct.

Preferably, no shut-off valves are provided along the duct **15A** and, hence, the delivery line **15** is always in fluid communication with the milk dispensing nozzle **16,** regardless of whether steam is supplied to the heater **19** or not.

Along the duct **15B** a shut-off valve **25** is instead provided, which can be operated so as to allow the foamed or non-foamed cold milk to flow along the duct **15B** or prevent it from flowing depending on the type of beverage to be produced, as described more in detail below.

The milk module **3** further comprises a washing circuit having the function of washing the ducts of the milk module **3** where milk flows, both by a mere rinsing with water at the end of each milk-based beverage producing cycle or after the milk module **3** has not been used for a given amount of time, and by a more in-depth washing with detergent, which is normally carried out when the machine **1** is turned off, for example at the end of the day.

The washing circuit comprises a hot water supply line **26** to supply the suction line **9** with a hot water flow from the heater **4.** The hot water supply line **26** has an inlet coupled to an outlet of the three-way valve **22** to selectively fluidically communicate with the hot water/steam supply duct **21** and receive hot water from the heater **4.** The supply line **26** opens into the suction line **9** at a T joint **27** between the shut-off valve **11** and the T joint **13,** where the air line **12** open into the suction line **9.**

The washing circuit further comprises a drainage line **28** having the function of conveying either rinsing hot water or water and washing detergent mixture flowing in the delivery line **15,** namely from the outlets of the ducts **15A** and **15B,** into the waste container **24** so as to prevent it from reaching the outlet of the milk dispensing nozzle **16.**

Conveniently, the drainage line **28** is enabled during rinsing and washing operations to suck hot water or water and detergent mixture flowing along the suction line **9** and the delivery line **15** and, at the beginning of each milk-based beverage producing cycle, to suck the water that, after each rinsing, remains along the suction line **9** and the delivery line **15.**

According to a preferred embodiment shown in Figure 1, the drainage line **28** has a first end fluidically connected to the milk dispensing nozzle **16** upstream of the outlet thereof and a second end that opens into the waste container **24,** and comprises a pump **29** and a shut-off valve **30**, which is arranged on the suction side of the pump **29** and has the function of causing, when it is closed, the milk dispensing nozzle **16** to be fluidically isolated from the waste container **24.**

Optionally, the shut-off valve **30** can be omitted if the pump **29** is so designed so as to cause, when it is turned off, a fluid-tight separation between its suction and delivery sides.

The operation of the milk module **3** will be described below with reference to three different operating steps:
1) production of hot or cold, foamed or non-foamed milk;
2) rinsing with hot water at the end of a milk-based beverage producing cycle;
3) the washing with detergent when the machine is not working.

### 1) Production of hot or cold foamed or non-foamed milk

In response to a selection of a milk-based beverage, the electronic control unit **32** of the machine **1** operates the pump **10** to cause a given amount of milk to be sucked out of the milk container **8** and supplied to the delivery line **15.** If foamed milk is required, the electronic control unit **32** opens the valve **14** to allow a given quantity of air to flow into the air line **12** and be sucked into the milk flowing along the suction line **9.** The pump **10** is then operated to cause the milk and air mixture to flow through the flow restriction **17** in order to be transformed, in a cold state, into foamed milk.

If foamed or non-foamed hot milk is required, the electronic control unit **32** closes the shut-off valve **25** along the duct **15B** to prevent milk from flowing therealong and operates the heater **4** of the brewing unit **2** to cause steam to be produced and supplied to the hot water/steam supply duct **21.** At the same time, the three-way valve **22** is controlled so as to cause the steam produced by the heater **4** to be supplied to the heater **19** to heat the foamed or non-foamed milk flowing along the duct **15B.**

If foamed or non-foamed cold milk is required, the shut-off valve **25** of the duct **15B** is opened in order to allow milk to flow therethrough, whereas the three-way valve **22** is controlled to prevent steam from being supplied to the heater **19.** In this way, foamed or non-foamed cold milk reaches the milk dispensing nozzle **16** flowing through both ducts **15A** and **15B.**

It is worth noting that, if the milk module **3** is required to produce hot milk immediately before the production of cold milk, the heater **19,** even if it is not supplied with steam, preserves some residual heat which heats to a low extent the cold milk flowing along the duct **15A.** However, this heating fails to adversely affect the final temperature of the cold milk dispensed because the amount of cold milk flowing along the duct **15B** is greater than the amount of milk flowing along the duct **15A** and the low temperature of the cold milk along the duct **15B** mitigates the temperature increase in the milk flowing along the duct **15A.** The grater milk flow in the duct **15B** compared to the duct **15A,** when the shut-off valve **25** is open, derives from the heater **19** defining, due to its own conformation, a hydraulic resistance that counters to a certain extent the flow of milk along the duct **15A** and, resultingly, causes the duct **15B** to become a preferred path for the milk downstream of the bifurcation **18.**

### 2) Rinsing with hot water

At the end of a milk-based beverage producing cycle, the milk module **3** is subjected to a hot water rinsing in order to eliminate milk residues present along the suction line **9** and the delivery line **15** and in the different operating components distributed therealong.

The hot water used for rinsing is produced by the heater **4** and supplied to the water/steam supply line **21.**

During rinsing, the electronic control unit **32** closes the shut-off valve **11** to fluidically isolate the milk container **8,** opens the shut-off valve **25** to allow milk to flow along the duct **15B,** and closes the valve **14** at the inlet of the air line **12.**

At the same time, the three-way valve **22** is controlled so as to cause water to flow from the water/steam supply line **21** to the hot water supply line **26,** and the pump **10** is operated to cause hot water to flow, through the pump **10,** from the suction line **9** to the delivery line **15** and, through both ducts **15A** and **15B,** reach the milk dispensing nozzle **16.**

Operation of the pump **29** prevents hot water, once it has entered the milk dispensing nozzle **16,** from reaching the outlet of the dispensing nozzle **16.** As a matter of fact, hot water is sucked by the pump **29** immediately upstream of the outlet of the dispensing nozzle 16 and is conveyed, through the drainage line **28,** into the waste container **24.** The shut-off valve **30** is obviously open during this step. After a given amount of time has elapsed, during which a predetermined amount of hot water flows along the suction line **9** and the delivery line **15,** the supply of hot water is interrupted, the pump **29** is stopped and the shut-off valve **30** is closed.

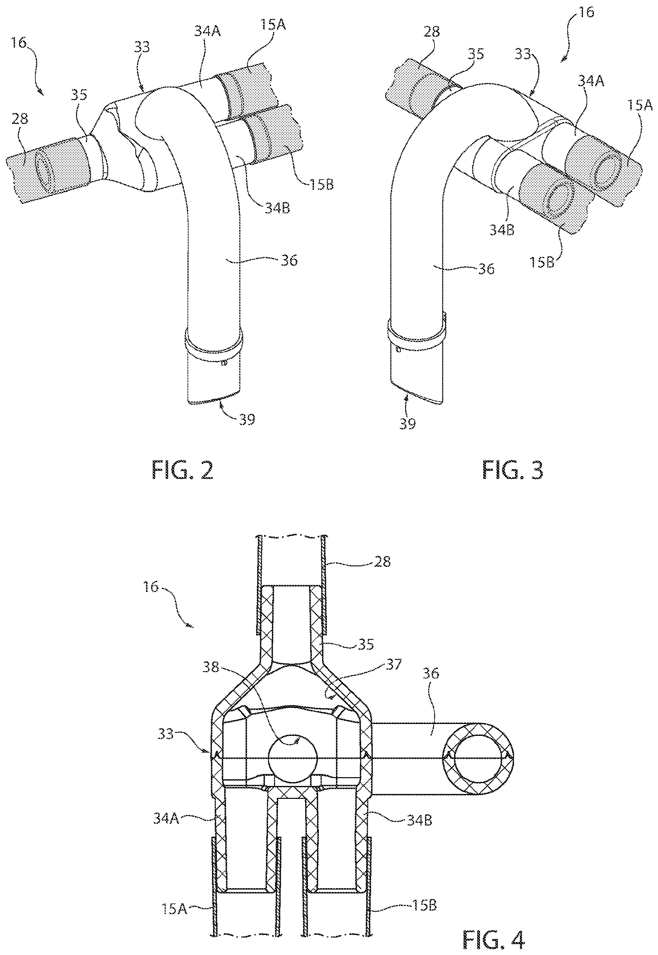

It is worth noting that during the suction generated by the pump **29,** drainage of the water flowing out of the ducts **15A** and **15B** is substantially total, which means that not even a part of water reaches the outlet of the milk dispensing nozzle **16.** This is possible thanks to the combined action of the suction force and of the position of the inlet of the drainage line **28** with respect to the outlets of the ducts **15A** and **15B** and the outlet of the milk dispensing nozzle **16.** To this aim, the milk dispensing nozzle **16** can have different conformations, provided that they are designed so that the inlet of the drainage line **28** is, for the water coming from the ducts **15A** and **15B,** a preferred path compared to the outlet of the milk dispensing nozzle 16. A preferred embodiment of the milk dispensing nozzle **16** is shown in Figures 2 to 4 and will be described below in more detail.

At the end of the rinsing, the suction line **9** and the delivery line **15** remain full of water, which is sucked at the beginning of the following milk production cycle by operating the pump **29** for a predetermined amount of time, which is calculated based on the water volume to be sucked. Preferably, at the beginning of a new milk producing cycle, the pump **29** is operated at least for an amount of time enough to suck the water contained in the part of circuit upstream of the milk dispensing nozzle **16.** When the pump **29** is stopped and the shut-off valve **30** is closed, a new beverage producing cycle may commence.

Preferably, the above-described rinsing is carried out, as mentioned before, after each milk-based beverage producing cycle and after a predetermined amount of time during which the milk module 3 is inoperative. According to an alternative operating mode, the rinsing is not carried out after each milk-based beverage production cycle, but only when a given amount of time, for example a few minutes, has elapsed since the last time a milk-based beverage was dispensed. This operating mode has the advantage of optimizing cycle times, in case two or more beverages are produced in very close succession.

### 3) Washing with detergent

As already mentioned above, this in-depth washing is periodically carried out when the machine 1 is inoperative, typically at the end of a work day.

This in-depth washing comprises the three sub-steps described below:
i. The inlet of the suction line **9** is extracted, usually manually by an operator, from the milk container **8** and is inserted into another container (not shown) containing a detergent, preferably in the form of a tablet or of a concentrated liquid. The electronic control unit **32** is configured to cause, during this step, the shut-off valve **11** between the container with the detergent and the T joint **27** to open, the valve **14** of the air line **12** to close and the pump **10** to be inoperative so as to fluidically separate the suction line **9** from the delivery line **15.** The three-way valve **22** is controlled to allow hot water to flow from the water/steam supply duct **21** to the hot water supply line **26** so as to reach, through the suction line **9,** and fill the container containing the detergent, thus forming a water and detergent mixture.
ii. Once the container has been filled with hot water, the supply of hot water is interrupted and the pump **10** is operated to extract the water and detergent mixture from the container and cause it to flow along the suction line **9** and along both ducts **15A** and **15B** of the delivery line **15.** Simultaneously with the pump **10,** also the pump **29** is operated to suck the washing mixture and convey it, through the drainage line **28,** to the waste container **24.**
iii. Once the container is empty, at least one rinsing with clean hot water is carried out. To this aim, the above-described sub-steps i and ii are sequentially repeated, with the sole difference that no detergent is added to the container. Sub-steps i and ii are repeated, if necessary, until no more traces of detergent are detected in the rinsing water. To this aim, a conductivity sensor **31** may be used, which is preferably arranged close to the inlet of the suction line **9.** At the end of the rinsing, the inlet of the suction line **9** is placed again in the milk container **8** and the milk module **3** is ready for a new production cycle.

Conveniently, both during the washing with detergent and the rinsing with hot water, the pump **29** is stopped for a few instants and then operated again, so that, in the instants in which it is inoperative, a small amount of water flows through the outlet of the milk dispensing nozzle **16** to remove milk residues possibly present between the inlet of the drainage line **28** and the outlet of the milk dispensing nozzle **16.**

In the end, before the washing with detergent a small amount of hot or cold water is preferably caused to flow along the suction line **9** and the delivery line **15** and, then, sucked in the area of the milk dispensing nozzle **16** in order to reduce the quantity of residual milk present in the circuit.

In view of the foregoing, the advantage arising from the sucking of waste water through the pump **29** arranged on the drainage line **28** may be appreciated. By so doing, indeed, all components coming into contact with milk can be washed, included the entire delivery line **15** and part of the milk dispensing nozzle **16,** without having waste water flowing in the beverage dispensing compartment **5.**

Figure 2 shows, by way of example, a milk dispensing nozzle **16,** whose geometry is particularly advantageous, in combination with the suction effect of the pump **29,** to achieve the above-indicated advantages.

In particular, the milk dispensing nozzle **16** shown in Figure 2 comprises a collector body **33** having:
two inlet hose connectors **34A** and **34B,** to which the outlet ends of the ducts **15A** and **15B,** respectively, are coupled,
an outlet hose connector **35,** to which the inlet end of the drainage line **28** is coupled, and
a dispensing duct **36,** through which the milk flowing into the collector body **33** through the ducts **15A** and **15B** is dispensed into a glass in the beverage dispensing compartment **5.**

As shown in Figures 2, 3 and 4, the inlet hose connectors **34A** and **34B** and the outlet hose connector **35** are arranged on opposite sides of the collector body **33** and have respective mutually parallel axes lying in one and the same plane. In a preferred embodiment shown in Figures 2, 3 and 4, the lying plane is, in use, substantially horizontal. In alternative embodiments (not shown), however, the lying plane may be oriented differently, in particular it could be arranged so that the inlet hose connectors **34A** and **34B** are arranged at a higher level than the outlet hose connector **35.**

The collector body **33** defines an inner chamber **37,** which has, in a horizontal cross section, the shape of a funnel and communicates, in the larger area of its section, with the two inlet hose connectors **34A** and **34B** and, in the narrower area of its section, with the outlet hose connector **35.**

The dispensing duct **36** extends from the top of the collector body **33** and communicates with the chamber **37** through a hole **38** formed in an upper wall of the collector body **33** and having an axis that is substantially perpendicular to the lying plane of the axes of the inlet hose connectors **34A** and **34B** and of the outlet hose connector **35.**

As shown in Figures 2 and 3, the dispensing duct **36** develops in a vertical plane and comprises a proximal inverted U-shaped portion and a distal straight portion ending with the milk outlet **39.**

The particular shape of the collector body **33** and the relative position of the inlet hose connectors **34A** and **34B,** of the outlet hose connector **35** and of the dispensing duct **36** cause, during washing, during which the shut-off valve **30** is open and the pump **29** is operating, the drainage line **28** to represent a preferred path for the water coming from the ducts **15A** and **15B** and reaching the chamber **37.** Indeed, since the outlet hose connector **35** substantially faces the inlet hose connectors **34A** and **34B** in a supply direction of the flow that, through the inlet hose connectors **34A** and **34B,** enters the chamber **37,** the water flow into the chamber **37** is caused to flow in the same direction and, hence, to flow into the outlet hose connector **35,** rather than make a 90° deflection and flow into the dispensing duct **36.** Besides the position of the hole **38,** the inverted U shape of the proximal portion of the dispensing duct **36** also helps make the flow of water in the dispensing duct **36** less easy than it is in the outlet hose connector **35.**

The joined effect of the geometry of the milk dispensing nozzle **16** and of the suction force generated by the pump **29** results in the total convergence of the water flow towards the drainage line **28** and prevents water from reaching, even if in a very small amount, the milk outlet **39.**

Preferably, the ducts **15A** and **15B** and the drainage line **28** are formed by flexible hoses and the inlet hose connectors **34A** and **34B** and the outlet hose connector **35** are hose male quick connectors, where the ends of the ducts **15A** and **15B** and the inlet end of the drainage line **28,** respectively, are coupled through pressing.

Furthermore, the collector body **33** is preferably formed by two shells, which are manufactured by plastic material moulding and are mutually coupled by ultrasound welding.

In an alternative embodiment (not shown), the ducts **15A** and **15B** converge in a common end segment before joining the milk dispensing nozzle **16,** which, as a consequence, has a single inlet hose connector connected to the end segment.

## Claims

1. A machine **(1)** for producing milk-based beverages;
the machine **(1)** comprises a milk module **(3)** for producing hot or cold, foamed or smooth milk;
the milk module **(3)** comprises a dispensing nozzle **(16),** a supply line **(9, 10, 15),** a drainage line **(28),** and an electronic control unit **(32);** the machine (1) being **characterized in that**:
the drainage line **(28)** extends from the dispensing nozzle **(16)** to a waste container **(24)** and comprises a suction pump **(29);**
the supply line **(9, 10, 15)** comprises a supply pump **(10),** a suction line **(9)** extending from a fluid inlet to a suction side of the supply pump **(10),** and a delivery line **(15)** extending from a delivery side of the supply pump **(10)** to the dispensing nozzle **(16);**
the electronic control unit **(32)** is configured to cause the milk module **(3)** to operate in a production mode, in which the suction line **(9)** is supplied with milk, and in a washing mode, in which the suction line **(9)** is supplied with washing liquid;
the dispensing nozzle **(16)** comprises a collector body **(33)** having an internal chamber **(37)** and comprising at least one inlet connector **(34A; 34B),** an outlet connector **(35),** and a milk dispensing duct **(36)** through which hot or cold, foamed or smooth milk is dispensed in a container;
the inlet connector **(34A; 34B)** is connected to the supply line **(9, 10, 15)** to receive therefrom milk when the milk module **(3)** is caused to operate in a production mode, and a washing liquid when the milk module **(3)** is caused to operate in a washing mode; and
the outlet connector **(35)** is in fluid communication with the chamber **(37)** to receive therefrom the washing liquid when the milk module **(3)** is caused to operate in the washing mode to supply the washing liquid to a drainage line **(28);**
the inlet connector **(34A; 34B),** the outlet connector **(35)** and the milk dispensing duct **(36)** open into the chamber **(37)** and are arranged so that the outlet connector **(35)** substantially faces the inlet connector **(34A; 34B)** in a direction of supply of the washing liquid into the chamber **(37),** and the milk dispensing duct **(36)** is arranged so that the washing liquid may flow therein in a direction substantially transversal to said direction of supply, so as to result in the outlet connector **(35)** representing a preferred path for the washing liquid with respect to the milk dispensing duct **(36).**

2. The machine **(1)** of claim **1,** wherein the direction of supply is substantially horizontal, and the milk dispensing duct **(36)** is arranged to cause the washing water to flow therein via an upwards deviation.

3. The machine **(1)** of claim **1** or **2,** wherein the at least one inlet connector **(34A; 34B)** and the outlet connector **(35)** have respective mutually parallel axes lying in one and the same plane; the milk dispensing duct **(36)** has an inlet **(38)** having an axis substantially perpendicular to the lying plane of the axes of the inlet connector **(34A; 34B)** and of the outlet connector **(35).**

4. The machine **(1)** of claim **3,** wherein the axes of the inlet connector **(34A; 34B)** and of the outlet connector **(35)** lie in a horizontal plane and the axis of the inlet **(38)** of the milk dispensing duct **(36)** is vertical.

5. The machine **(1)** of any one of the preceding claims, wherein the milk dispensing duct **(36)** extends in a vertical plane from the top of the collector body **(33)** of the dispensing nozzle **(36)** and comprises a proximal inverted U-shaped portion and a distal straight portion ending with the dispensing outlet **(39).**

6. The machine **(1)** of any one of the preceding claims, wherein the chamber **(37)** is funnel-shaped and has a wider section, in which the at least one inlet connector **(34A; 34B)** opens, and a narrower section, in which the outlet connector **(35)** opens.

7. The machine **(3)** of any one of the preceding claims, wherein the delivery line **(15)** comprises a bifurcation, at which the delivery line **(15)** divides into two delivery ducts **(15A, 15B)** which open into the dispensing nozzle **(16)** either separately or via a common terminal portion;
wherein, when the delivery ducts **(15A, 15B)** open into the dispensing nozzle **(16)** via a common terminal portion, the collector body **(33)** of the dispensing nozzle **(16)** comprises a single inlet connector **(34A; 34B)** fluidically connected to the common terminal portion;
and wherein, when the delivery ducts **(15A, 15B)** open into the dispensing nozzle **(16)** separately, the collector body **(33)** of the dispensing nozzle **(16)** comprises two inlet connectors **(34A, 34B),** each of which is associated to a respective delivery duct **(15A, 15B);** the two inlet connectors **(34A; 34B)** open into the chamber **(37)** in such a way that they both substantially face the outlet connector **(34A; 34B)** in the direction of supply of the fluid into the chamber **(37).**

8. The machine **(1)** of claim **7,** wherein the delivery line **(15)** further comprises a heater **(19)** arranged along one of the two delivery ducts **(15A)** and selectively operable to heat milk; and an electronically-controllable shut-off valve **(25)** arranged along the other of the two delivery ducts **(15B)** and selectively operable to allow milk to flow therethrough.

9. The machine **(1)** of any one of preceding claims, further comprising an air line **(12)** to controllably supply air into the suction line **(9);** and a flow restriction **(17)** arranged downstream of the supply pump **(10)** to transform, when the milk module **(3)** operates in the production mode, an air/milk mixture into foamed milk.

10. The machine **(1)** of any one of the preceding claims, wherein the milk module **(3)** further comprises:
a first valve device **(11)** arranged between the fluid inlet of the suction line **(9)** and the supply pump **(10);**
a water supply line **(26)** to supply water to the suction line **(9)** at an emanation point **(27)** between the first valve device **(11)** and the supply pump **(10);** and
a second valve device **(22)** operable to cause the water supply line **(26)** to be selectively supplied with water;
wherein the electronic control unit **(32)** is further configured to operate the milk module **(3)** in a first washing mode, preferably either between two successive production cycles or after a certain period of time;
and wherein, in the first washing mode, the electronic control unit **(32)** is further configured to:
control the first valve device **(11)** and the second valve device **(22)** to cause water to flow into the water supply line **(26)** and, therefrom, into the suction line **(9)** without reaching the fluid inlet of the suction line **(9);** and
co-ordinately operate the supply pump **(10)** and the suction pump **(29)** to cause water to flow along the suction line **(9),** the delivery line **(15)** and the drainage line **(28).**

11. The machine **(1)** of claim **10,** wherein the electronic control unit **(32)** is further configured to operate the milk module **(3)** in a second washing mode, preferably at the end of the daily service;
wherein, during the first washing mode, the fluid inlet of the suction line **(9)** is immersed in a milk container **(8)** and during the second washing mode the fluid inlet of the suction line **(9)** is immersed in a detergent container;
and wherein, in the second washing mode, the electronic control unit **(32)** is further configured to:
control the first valve device **(11)** and the second valve device **(22)** to cause water to flow into the water supply line **(26)** and reach the fluid inlet of the suction line **(9)** and fill the detergent container;
when the detergent container is full, co-ordinately operate the supply pump **(10)** and the suction pump **(29)** and control the first valve device **(11)** and second valve device **(22)** to prevent water from flowing in the water supply line **(26)** and to cause the water/detergent mixture in the detergent container to flow along the suction line **(9),** the delivery line **(15)** and the drainage line **(28).**

## Patentansprüche

1. Maschine **(1)** zur Herstellung von Getränken auf Milchbasis;
wobei die Maschine **(1)** ein Milchmodul **(3)** zum Herstellen von heißer oder kalter, aufgeschäumter oder gleichmäßiger Milch umfasst;
das Milchmodul **(3)** eine Ausgabedüse **(16),** eine Zufuhrleitung **(9, 10, 15),** eine Ablaufleitung **(28)** und eine elektronische Steuereinheit **(32)** umfasst; wobei die Maschine (1) **dadurch gekennzeichnet ist, dass**:
die Ablaufleitung **(28)** von der Ausgabedüse **(16)** zu einem Abfallbehälter **(24)** verläuft und eine Saugpumpe **(29)** umfasst;
die Zufuhrleitung **(9, 10, 15)** eine Zufuhrpumpe **(10),** eine Saugleitung **(9),** die sich von einem Flüssigkeitseinlass zur Saugseite der Zufuhrpumpe **(10)** erstreckt, und eine Druckleitung **(15)** umfasst, die sich von der Druckseite der Zufuhrpumpe **(10)** zur Ausgabedüse **(16)** erstreckt;
die elektronische Steuereinheit **(32)** so konfiguriert ist, dass sie das Milchmodul **(3)** dazu veranlasst, in einem Produktionsmodus zu operieren, in dem die Saugleitung **(9)** mit Milch geführt wird, sowie in einem Reinigungsmodus, in dem die Saugleitung **(9)** mit Reinigungsflüssigkeit geführt wird;
die Ausgabedüse **(16)** einen Sammlerkörper **(33)** umfasst, der eine innere Kammer **(37)** aufweist und mindestens einen Einlassverbinder **(34A; 34B),** einen Auslassverbinder **(35)** sowie einen Milchausgabekanal **(36)** umfasst, durch den heiße oder kalte, aufgeschäumte oder gleichmäßige Milch in einen Behälter ausgegeben wird;
der Einlassverbinder **(34A; 34B)** mit der Zufuhrleitung **(9, 10, 15)** verbunden ist, um von dieser Milch aufzunehmen, wenn das Milchmodul **(3)** in einem Produktionsmodus betrieben wird, und eine Reinigungsflüssigkeit, wenn das Milchmodul **(3)** in einem Reinigungsmodus betrieben wird; und
der Auslassverbinder **(35)** in Fluidverbindung mit der Kammer **(37)** steht, um von dieser die Waschflüssigkeit aufzunehmen, wenn das Milchmodul **(3)** im Waschmodus betrieben wird, um die Waschflüssigkeit einer Ablaufleitung **(28)** zuzuführen;
der Einlassverbinder **(34A; 34B),** der Auslassverbinder **(35)** und der Milchauslasskanal **(36)** in die Kammer **(37)** münden und so angeordnet sind, dass der Auslassverbinder **(35)** im Wesentlichen dem Einlassverbinder gegenüberliegt **(34A; 34B)** in einer Richtung der Zufuhr der Waschflüssigkeit in die Kammer **(37)** im Wesentlichen gegenüberliegt, und der Milchausgabekanal **(36)** so angeordnet ist, dass die Waschflüssigkeit darin in einer Richtung im Wesentlichen quer zu der genannten Zufuhrrichtung fließen kann, so dass der Auslassverbinder **(35)** einen bevorzugten Pfad für die Waschflüssigkeit im Hinblick auf den Milchausgabekanal **(36)** darstellt.

2. Maschine **(1)** nach Anspruch **1,** wobei die Zufuhrrichtung im Wesentlichen horizontal ist und der Milchausgabekanal **(36)** so angeordnet ist, dass das Waschwasser über eine nach oben gerichtete Krümmung in diesen fließt.

3. Maschine **(1)** nach Anspruch **1** oder **2,** wobei der mindestens eine Verbinder **(34A; 34B)** und der Auslassverbinder **(35)** jeweils zueinander parallele Achsen aufweisen, die in ein und derselben Ebene liegen; wobei der Milchkanal **(36)** einen Einlass **(38)** aufweist, der eine Achse im Wesentlichen senkrecht zu der Ebene aufweist, in der die Achsen des Einlassverbinders **(34A; 34B)** und des Auslassverbinders **(35)** liegen.

4. Maschine **(1)** nach Anspruch **3,** wobei die Achsen des Verbinders **(34A; 34B)** und des Auslassverbinders **(35)** in einer horizontalen Ebene liegen und die Achse des Einlasses **(38)** des Milchkanals **(36)** vertikal verläuft.

5. Maschine **(1)** nach einem der vorstehenden Ansprüche, wobei der Milchausgabekanal **(36)** in einer vertikalen Ebene von der Oberseite des Sammelkörpers **(33)** der Ausgabedüse **(36)** erstreckt wird und einen proximalen, umgekehrt U-förmigen Abschnitt sowie einen distalen, geraden Abschnitt umfasst, der in der Ausgabemündung **(39)** endet.

6. Maschine **(1)** nach einem der vorstehenden Ansprüche, wobei die Kammer **(37)** eine trichterförmige Form aufweist und einen breiteren Abschnitt, in den der mindestens eine Verbinder **(34A; 34B)** mündet, sowie einen schmaleren Abschnitt aufweist, in den der Auslassverbinder **(35)** mündet.

7. Maschine **(3)** nach einem der vorstehenden Ansprüche, wobei die Zufuhrleitung **(15)** eine Verzweigung umfasst, an der sich die Zufuhrleitung **(15)** in zwei Zufuhrkanäle **(15A, 15B)** teilt, die entweder separat oder über einen gemeinsamen Endabschnitt in die Ausgabedüse **(16)** münden;
wobei, wenn die Zufuhrkanäle **(15A, 15B)** über einen gemeinsamen Anschlussabschnitt in die Ausgabedüse **(16)** münden, der Sammelkörper **(33)** der Ausgabedüse **(16)** einen einzigen Verbinder **(34A; 34B)** umfasst, der fluidisch mit dem gemeinsamen Anschlussabschnitt verbunden ist;
und wobei, wenn die Zufuhrkanäle **(15A, 15B)** separat in die Ausgabedüse **(16)** münden, der Sammelkörper **(33)** der Ausgabedüse **(16)** zwei Verbinder **(34A, 34B)** umfasst, von denen jeder einem jeweiligen Zufuhrkanal **(15A, 15B)** assoziiert ist; die beiden Einlassverbinder **(34A; 34B)** in die Kammer **(37)** derart münden, dass sie beide in Richtung der Zuführung des Fluids in die Kammer **(37)** im Wesentlichen dem Auslassverbinder **(34A; 34B)** zugewandt sind.

8. Maschine **(1)** nach Anspruch **7,** wobei die Zufuhrleitung **(15)** weiter eine Heizung **(19)** umfasst, die entlang eines der beiden Zufuhrkanäle **(15A)** angeordnet ist und selektiv betreibbar ist, um Milch zu erwärmen; sowie ein elektronisch steuerbares Absperrventil **(25),** das entlang des anderen der beiden Zufuhrkanäle **(15B)** angeordnet ist und selektiv betreibbar ist, um den Durchfluss von Milch durch diesen zu ermöglichen.

9. Maschine **(1)** nach einem der vorstehenden Ansprüche, die weiter eine Luftleitung **(12)** zur steuerbaren Zufuhr von Luft in die Saugleitung **(9)** sowie eine stromabwärts der Zufuhrpumpe **(10)** angeordnete Durchflussdrossel **(17)** umfasst, um, wenn das Milchmodul **(3)** im Produktionsmodus wirkt, ein Luft-Milch-Gemisch in aufgeschäumte Milch umzuwandeln.

10. Maschine **(1)** nach einem der vorstehenden Ansprüche, wobei das Milchmodul **(3)** ferner Folgendes umfasst:
eine erste Ventilvorrichtung **(11),** die zwischen dem Flüssigkeitseinlass der Saugleitung **(9)** und der Zufuhrpumpe **(10)** angeordnet ist;
eine Wasserzufuhrleitung **(26)** zum Führen von Wasser in die Saugleitung **(9)** an einer Entnahmestelle **(27)** zwischen der ersten Ventilvorrichtung **(11)** und der Förderpumpe **(10);** und
eine zweite Ventilvorrichtung **(22),** die betriebsfähig ist und so betätigt werden kann, dass die Wasserzufuhrleitung **(26)** wahlweise mit Wasser geführt wird;
wobei die elektronische Steuereinheit **(32)** weiter so konfiguriert ist, dass sie das Milchmodul **(3)** in einem ersten Reinigungsmodus operiert, vorzugsweise entweder zwischen zwei aufeinanderfolgenden Produktionszyklen oder nach Ablauf einer bestimmten Zeitspanne;
und wobei im ersten Waschmodus die elektronische Steuereinheit **(32)** ferner zu Folgendem konfiguriert ist:
Steuern der ersten Ventilvorrichtung **(11)** und der zweiten Ventilvorrichtung **(22),** um zu bewirken, dass Wasser in die Wasserzufuhrleitung **(26)** und von dort in die Saugleitung **(9)** fließt, ohne den Flüssigkeitseinlass der Saugleitung **(9)** zu erreichen; und
koordiniertes Betreiben der Zufuhrpumpe **(10)** und der Saugpumpe **(29),** um einen Wasserfluss entlang der Saugleitung **(9),** der Druckleitung **(15)** und der Ablaufleitung **(28)** zu bewirken.

11. Maschine **(1)** nach Anspruch **10,** wobei die elektronische Steuereinheit **(32)** ferner so konfiguriert ist, dass sie das Milchmodul **(3)** in einem zweiten Reinigungsmodus operiert, vorzugsweise am Ende des täglichen Betriebs;
wobei während des ersten Waschmodus der Flüssigkeitseinlass der Saugleitung **(9)** in einen Milchbehälter **(8)** eingetaucht ist und während des zweiten Waschmodus der Flüssigkeitseinlass der Saugleitung **(9)** in einen Reinigungsmittel-Behälter eingetaucht ist;
und wobei im zweiten Waschmodus die elektronische Steuereinheit **(32)** ferner zu Folgendem konfiguriert ist:
Steuern der ersten Ventilvorrichtung **(11)** und der zweiten Ventilvorrichtung **(22),** um zu bewirken, dass Wasser in die Wasserzufuhrleitung **(26)** fließt, den Flüssigkeitseinlass der Saugleitung **(9)** erreicht und den Waschmittelbehälter füllt;
wenn der Waschmittelbehälter voll ist, koordiniertes Betreiben der Zufuhrpumpe **(10)** und die Saugpumpe **(29)** synchron und steuern der ersten Ventilvorrichtung **(11)** und der zweiten Ventilvorrichtung **(22),** um zu verhindern, dass Wasser in die Wasserzufuhrleitung **(26)** fließt, und um zu bewirken, dass das Wasser-Waschmittel-Gemisch im Waschmittelbehälter entlang der Saugleitung **(9)** fließt, die Förderleitung **(15)** und die Ablaufleitung **(28)** .

## Revendications

1. Machine **(1)** pour la production de boissons à base de lait ;
la machine **(1)** comprend un module de lait **(3)** pour la production de lait chaud ou froid, mousseux ou onctueux ;
le module de lait **(3)** comprend une buse de distribution **(16),** une conduite d'alimentation **(9, 10, 15),** une conduite d'évacuation **(28)** et une unité de commande électronique **(32)** ; la machine (1) étant **caractérisée en ce que** :
la conduite de drainage **(28)** s'étend de la buse de distribution **(16)** à un conteneur de déchets **(24)** et comprend une pompe d'aspiration **(29)** ;
la conduite d'alimentation **(9, 10, 15)** comprend une pompe d'alimentation **(10),** une conduite d'aspiration **(9)** s'étendant d'une entrée de fluide à un côté aspiration de la pompe d'alimentation **(10),** et une conduite de refoulement **(15)** s'étendant d'un côté refoulement de la pompe d'alimentation **(10)** à la buse de distribution **(16)** ;
l'unité de commande électronique **(32)** est configurée pour amener le module de lait **(3)** à fonctionner dans un mode de production, dans lequel la conduite d'aspiration **(9)** est alimentée en lait, et dans un mode de lavage, dans lequel la conduite d'aspiration **(9)** est alimentée en liquide de lavage ;
la buse de distribution **(16)** comprend un corps de collecteur **(33)** doté d'une chambre interne **(37)** et comprenant au moins un raccord d'entrée **(34A ; 34B),** un raccord de sortie **(35)** et un conduit de distribution de lait **(36)** par lequel le lait chaud ou froid, mousseux ou onctueux, est distribué dans un récipient ;
le raccord d'entrée **(34A ; 34B)** est relié à la conduite d'alimentation **(9, 10, 15)** pour recevoir du lait lorsque le module de lait **(3)** est amené à fonctionner en mode de production, et un liquide de lavage lorsque le module de lait **(3)** est amené à fonctionner en mode de lavage ; et
le raccord de sortie **(35)** est en communication fluide avec la chambre **(37)** pour recevoir le liquide de lavage lorsque le module de lait **(3)** est amené à fonctionner en mode lavage pour fournir le liquide de lavage à une conduite d'évacuation **(28)** ;
le raccord d'entrée **(34A; 34B),** le raccord de sortie **(35)** et le conduit de distribution de lait **(36)** débouchent dans la chambre **(37)** et sont disposés de telle sorte que le raccord de sortie **(35)** fait sensiblement face au raccord d'entrée **(34A; 34B)** dans une direction d'alimentation du liquide de lavage dans la chambre **(37),** et le conduit de distribution de lait **(36)** est disposé de manière à ce que le liquide de lavage puisse s'écouler dans celui-ci dans une direction sensiblement transversale à ladite direction d'alimentation, de sorte que le raccord de sortie **(35)** représente un chemin privilégié pour le liquide de lavage par rapport au conduit de distribution de lait **(36).**

2. Machine **(1)** selon la revendication **1,** dans laquelle la direction d'alimentation est sensiblement horizontale, et le conduit de distribution de lait **(36)** est conçu pour amener l'eau de lavage à s'écouler dans celui-ci par une déviation vers le haut.

3. Machine **(1)** selon la revendication **1** ou **2,** dans laquelle l'au moins un raccord d'entrée **(34A** ; **34B)** et le raccord de sortie **(35)** ont des axes respectifs mutuellement parallèles situés dans un seul et même plan ; le conduit de distribution du lait **(36)** a une entrée **(38)** ayant un axe sensiblement perpendiculaire au plan des axes du raccord d'entrée **(34A ; 34B)** et du raccord de sortie **(35).**

4. Machine **(1)** selon la revendication **3,** dans laquelle les axes du raccord d'entrée **(34A ; 34B)** et du raccord de sortie **(35)** se situent dans un plan horizontal et l'axe de l'entrée **(38)** du conduit de distribution du lait **(36)** est vertical.

5. Machine **(1)** selon l'une quelconque des revendications précédentes, dans laquelle le conduit de distribution de lait **(36)** s'étend dans un plan vertical à partir du sommet du corps de collecteur **(33)** de la buse de distribution **(36)** et comprend une partie proximale en forme de U inversé et une partie distale droite se terminant par la sortie de distribution **(39).**

6. Machine **(1)** selon l'une quelconque des revendications précédentes, dans laquelle la chambre **(37)** est en forme d'entonnoir et présente une section plus large, dans laquelle s'ouvre l'au moins un raccord d'entrée **(34A ; 34B),** et une section plus étroite, dans laquelle s'ouvre le raccord de sortie **(35).**

7. Machine **(3)** selon l'une quelconque des revendications précédentes, dans laquelle la conduite de distribution **(15)** comprend une bifurcation, au niveau de laquelle la conduite de distribution **(15)** se divise en deux conduits de distribution **(15A, 15B)** qui débouchent dans la buse de distribution **(16)** soit séparément, soit par l'intermédiaire d'une partie terminale commune ;
dans laquelle, lorsque les conduits de distribution **(15A, 15B)** débouchent dans la buse de distribution **(16)** par l'intermédiaire d'une partie terminale commune, le corps de collecteur **(33)** de la buse de distribution **(16)** comprend un seul raccord d'entrée **(34A ; 34B)** relié de manière fluidique à la partie terminale commune ;
et dans laquelle, lorsque les conduits de distribution **(15A, 15B)** débouchent séparément dans la buse de distribution **(16),** le corps de collecteur **(33)** de la buse de distribution **(16)** comprend deux raccords d'entrée **(34A, 34B),** chacun étant associé à un conduit de distribution respectif **(15A, 15B)** ; les deux raccords d'entrée **(34A ; 34B)** débouchent dans la chambre **(37)** de telle sorte qu'ils fassent tous deux sensiblement face au raccord de sortie **(34A; 34B)** dans la direction d'alimentation du fluide dans la chambre **(37).**

8. Machine **(1)** selon la revendication **7,** dans laquelle la conduite de distribution **(15)** comprend en outre un réchauffeur **(19)** disposé le long de l'un des deux conduits de distribution **(15A)** et utilisable sélectivement pour chauffer le lait ; et une vanne d'arrêt à commande électronique **(25)** disposée le long de l'autre des deux conduits de distribution **(15B)** et utilisable sélectivement pour permettre au lait de s'écouler à travers celle-ci.

9. Machine **(1)** selon l'une quelconque des revendications précédentes, comprenant en outre une conduite d'air **(12)** pour fournir l'air de manière contrôlée à la conduite d'aspiration **(9)** ; et un limiteur de débit (17) disposé en aval de la pompe d'alimentation **(10)** pour transformer, lorsque le module de lait **(3)** fonctionne en mode de production, un mélange air/lait en lait mousseux.

10. Machine **(1)** selon l'une quelconque des revendications précédentes, dans laquelle le module de lait **(3)** comprend en outre :
un premier dispositif de vanne **(11)** disposé entre l'entrée de fluide de la conduite d'aspiration **(9)** et la pompe d'alimentation **(10)** ;
une conduite d'alimentation en eau **(26)** pour fournir de l'eau à la conduite d'aspiration **(9)** à un point d'émanation **(27)** entre le premier dispositif de vanne **(11)** et la pompe d'alimentation **(10)** ; et
un second dispositif de vanne **(22)** utilisable pour amener la conduite d'alimentation en eau **(26)** à être sélectivement alimentée en eau ;
dans laquelle l'unité de commande électronique **(32)** est en outre configurée pour faire fonctionner le module de lait **(3)** dans un premier mode de lavage, de préférence entre deux cycles de production successifs ou après une certaine période de temps ;
et dans laquelle, dans le premier mode de lavage, l'unité de commande électronique **(32)** est en outre configurée pour :
commander le premier dispositif de vanne **(11)** et le second dispositif de vanne **(22)** pour amener l'eau à s'écouler dans la conduite d'alimentation en eau **(26)** et, à partir de celle-ci, dans la conduite d'aspiration **(9)** sans atteindre l'entrée de fluide de la conduite d'aspiration **(9)** ; et
actionner de manière coordonnée la pompe d'alimentation **(10)** et la pompe d'aspiration **(29)** pour amener l'eau à s'écouler le long de la conduite d'aspiration **(9),** de la conduite de refoulement **(15)** et de la conduite d'évacuation **(28).**

11. Machine **(1)** selon la revendication **10,** dans laquelle l'unité de commande électronique **(32)** est en outre configurée pour faire fonctionner le module de lait **(3)** dans un second mode de lavage, de préférence à la fin du service quotidien ;
dans laquelle, au cours du premier mode de lavage, l'entrée de fluide de la conduite d'aspiration **(9)** est immergée dans un récipient de lait **(8)** et, au cours du second mode de lavage, l'entrée de fluide de la conduite d'aspiration **(9)** est immergée dans un récipient de détergent ;
et dans laquelle, dans le second mode de lavage, l'unité de commande électronique **(32)** est en outre configurée pour :
commander le premier dispositif de vanne **(11)** et le second dispositif de vanne **(22)** pour amener l'eau à s'écouler dans la conduite d'alimentation en eau **(26)** et atteindre l'entrée de fluide de la conduite d'aspiration **(9)** et remplir le réservoir de détergent ;
lorsque le réservoir de détergent est plein, actionner de manière coordonnée la pompe d'alimentation **(10)** et la pompe d'aspiration **(29)** et commander le premier dispositif de vanne **(11)** et le second dispositif de vanne **(22)** pour empêcher l'eau de s'écouler dans la conduite d'alimentation en eau **(26)** et pour amener le mélange eau/détergent dans le réservoir de détergent à s'écouler le long de la conduite d'aspiration **(9),** de la conduite de refoulement **(15)** et de la conduite d'évacuation **(28).**
